# EUROPEAN PATENT SPECIFICATION

(11) **EP 0 993 903 B1**
(45) Date of publication and mention of the grant of the patent: **22.12.2004**
(21) Application number: 99120383.7
(22) Date of filing: 13.10.1999
(51) Int. Cl.: B23Q 1/01, B23Q 39/02, B27M 1/08

(54) **Machine for working wooden articles**
Maschine zum Bearbeiten von Werkstücken aus Holz
Dispositif pour travailler des pièces en bois

(30) Priority: 14.10.1998 IT MO980212
(43) Date of publication of application: 19.04.2000
(73) Proprietor: Fattori S.R.L., 40043 Marzabotto (IT)
(72) Inventor: Fattori, Giovanni, 40043 Marzabotto, Bologna (IT)
(74) Representative: Crugnola, Pietro

(56) References cited:
- DE-A- 4 135 497
- US-A- 1 825 685
- US-A- 5 424 835
- US-A- 5 839 323
- PATENT ABSTRACTS OF JAPAN vol. 009, no. 164 (M-395), 10 July 1985 (1985-07-10) & JP 60 039060 A (KIYOUDOUKUMIAI SAGAKEN TETSUKOU KOUGIYOUKAI;OTHERS: 03), 28 February 1985 (1985-02-28)

## Description

The invention relates to a machine for working wood articles, particularly load pallets, or containers.

The prior art includes apparatus provided with a plurality of tools of the same type, for example mounted on tool-holder heads, such as riveting heads, milling heads, drilling heads or marking heads, slidably supported by a bar, which is in turn vertically slidable along uprights of a portal shaped frame. Said frame can slide on a track obtained on a bed on which reference means suitable to hold semi-finished products are placed, that, once finished the working, make, for example, a load pallet or a container.

The tools are driven by motors operating on racks arranged in such way as the tools can slide along the portal maintaining a constant reciprocal distance, or can move symmetrically with respect to a longitudinal plane of the machine.

The sliding of the tools on the bar, of the bar on the portal and of the portal on the bed are driven by a numerical control device, that allows the heads to be positioned at the point where the requested operation must be carried out, and finally the execution of such operation to be controlled.

It is known from JP 60039060-A, which discloses the closest prior art according to the preamble of claim 1, a machine capable of working wood articles, comprising a basement on which a table base is fixed, said table base supporting a mounting table (1) on which a work piece is mounted. The machine comprises a tool holder head movable on support means, said support means comprising end portions provided with sliding means capable of coupling with a substantially horizontal sliding surface on which said support means may move in a substantially horizontal direction.

A first drawback of the above mentioned apparatuses results from structural complexity, that involves high manufacturing costs. A further drawback lies on the fact that it is impossible to carry out workings of three-dimensional articles because of the reduced space between the tools and the underlying bed.

A still further drawback is found in tools movement type, which tools, as described above, are movable dependingly on one another. This fact make such types of apparatus less flexible.

Another drawback derives from the fact that the size of the articles that can be worked is limited by the dimensions of machine bed.

Finally, said apparatus can carry out only one type of working, for example riveting, milling, drilling or marking, which makes necessary for the user, in order to carry out a plurality of workings on the articles, to provide himself with a plurality of apparatus, one for each working, with considerable costs increase and scant production flexibility.

An object of the present invention is to find a remedy for the above indicated disadvantages.

Another object is to provide a machine for working wood articles characterized by simplified structure and great use flexibility.

A further object is to provide a machine capable of working three-dimensional articles.

The present invention is defined in claim 1.

In such a way the support structure of the tool-holder heads is no longer bound to the working bed, which makes possible to associate the machine according to the invention with beds having different length, according to requirements and dimensions of articles to be worked. It is also possible to work not only flat articles, but also three-dimensional articles such as cases and the like, excluding the bed, or using bed having a suitable height to work said three-dimensional articles.

Reference means can be arranged directly under said stand structure, or on universal bed support means, already available for the user, to hold and support portions of the articles.

Therefore the user is given the chance of buying the machine according to the invention without the bed, to save money, or buying the machine with one or more beds: in this event, the user can anyway use the machine without the bed to work three-dimensional articles.

In addition, the user can buy the bed later if he has bought the machine without the bed.

In a preferred version of the present invention said tool-holder heads are associated to tools suitable to carry out different workings. These tools comprising riveting tools, milling tools, drilling tools or marking tools.

In a further version of the present invention, the machine comprises also further support means suitable to slidably support a trimming unit.

In a still further version of the present invention, the machine comprises still further support means suitable to slidably support a marking unit, said marking unit being a fire marking unit or a ink jet marking unit.

The presence of tools suitable to carry out different workings, of a trimming unit and a marking unit makes the machine particularly versatile and much more flexible compared with existing apparatus.

In another version of the present invention, the machine comprises scanning means, for example laser optical scanning means, for surveying automatically the shape and dimensions of the articles, and defining the areas of the articles that are to be worked.

In case of small shaped articles said support structure can be provided with holders for said articles.

The invention will be better understood and put into practice with reference to the enclosed drawings, which show, for nonlimiting example purpose, an embodiment thereof, wherein:
Figure 1 schematic front view of a machine for working wood articles according to the invention;
Figure 2 is a schematic particular of a system for moving a tool-holder head along bar means;
Figure 3 is a particular of bar means showing the mechanism by which they are rotated with respect to a longitudinal axis thereof;
Figure 4 shows a trimming unit coupled with a machine according to the invention.

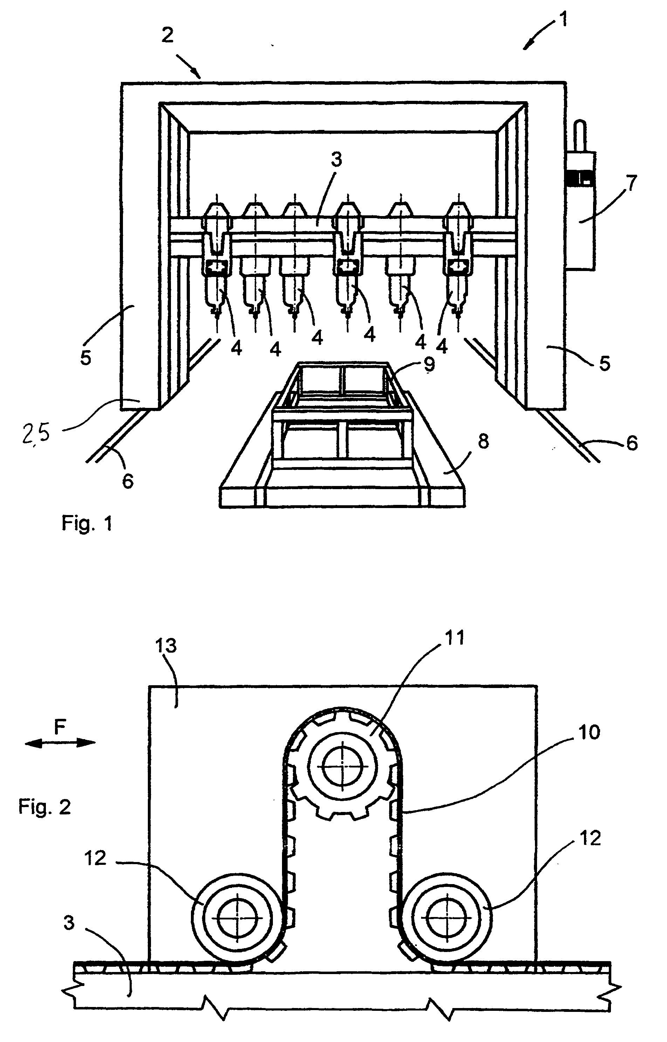

Referring to Figure 1, a machine for working wood articles comprises a portal 2 provided with two uprights 5 along which a bar 3 slides, suitable to slidably support six tool-holder heads 4 arranged three on one side and three on the other side of the bar 3. End portions 25 of the uprights 5 are in turn slidable on a track 6 arranged on the floor.

The portal 2 can also slide directly on the floor without using track 6; in that event the uprights 5 are provided, at respective bases 25, with support and moving means, suitable to support the portal 2 and to allow it to be moved.

The slidings of the heads 4 with respect to the bar 3, of the bar 3 with respect to the portal 2 and of the portal 2 on the track 6 are driven and controlled by a numerical control device 7. A plurality of reference means, each of which is suitable to receive an article 9, is placed on the floor, along the track 6.

In a version not shown, the reference means is placed on a bed, that is at the user's disposal.

The numerical control device 7 drives the movements of the heads 4, of the bar 3 and of the portal 2, in such a way as to drive the heads 4 to the points where the working operation must be carried out.

Sensor means, not shown, allows the numerical control device 7 to survey the position of the various reference means 8; in addition, it is possible to select a size of the article 9 among a set of standard sizes stored into the numerical control device 7, so that, after the position of a reference means 8 has been sensed, the numerical control device 7 automatically calculates (according to a software program stored therein) the set of points at which the heads 4 must be placed in order to carry out working operations. Sensor means can comprise laser scanning means, suitable to survey automatically the shape and position of the articles, even in absence of said reference means 8.

In addition, it is possible for the user to store new working programs corresponding to new sizes of the article 9, into the numerical control device 7.

The maximum distance between the bar 3 and the floor makes possible to work three-dimensional articles 9.

Figure 2 shows a possible embodiment of a mechanism for moving each tool-holder head 4 along the bar 3. A fixed toothed belt 10, extending through the whole length of the bar 3, meshes, at each tool-holder head 4, a motorized wheel 11 and two freely rotatable wheels 12. A motor, not shown, runs the motorized wheel 11, which, being engaged by the fixed belt 10, moves along a direction F identified by a longitudinal direction of the bar 3. The motorized wheel 11 is associated with a block 13 on which a tool-holder head 4 is arranged and to which the freely rotatable wheels 12 are coupled, that keep the orientation of the block 13 constant during sliding along the direction F.

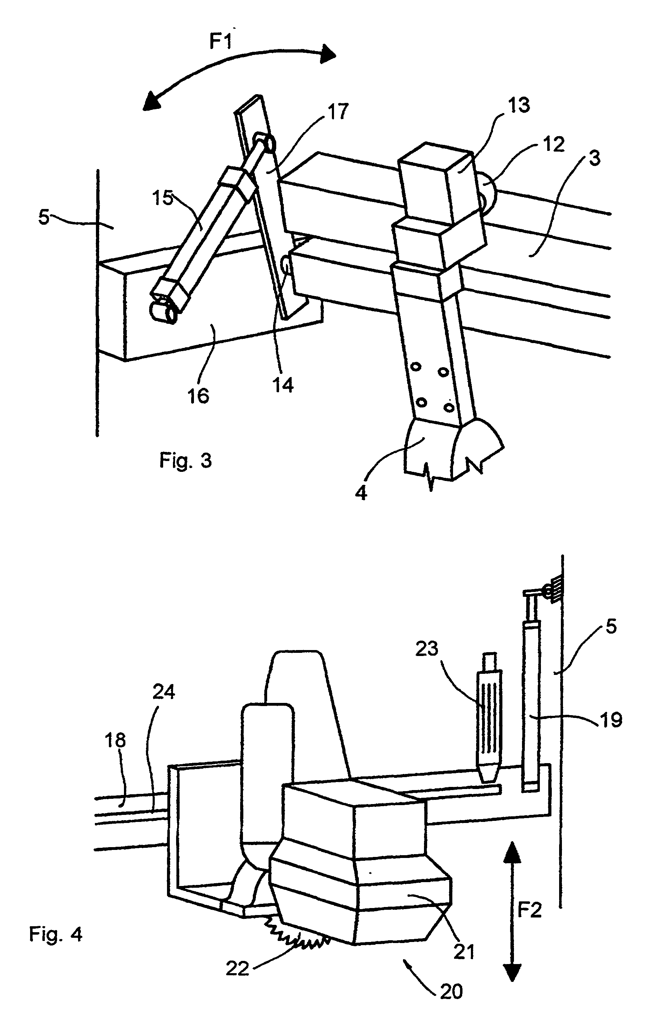

Referring to Figure 3, respective ends of the bar 3 are associated with pin means 14, allowing the bar 3 to rotate with respect to a longitudinal axis thereof in a direction shown by the arrow F1. The rotation is carried out by means of a pneumatic jack 15, coupled at one end with a fixed support 16, and, at a further end, to rod means 17 transmitting the rotation to the bar 3. In such a way, by rotating the bar 3, the tool-holder heads 4 may be automatically tilted at an angle having a preestablished width, for example to carry out a clinching operation.

Referring to Figure 4, a further bar 18 is slidable along the uprights 5 of the portal 2, in a direction shown by the arrow F2. The movement of the further bar 18 is obtained by means of a pneumatic jack engaging an end of the further bar 18. A trimming unit, provided with a saw 22 driven by a motor 21, is slidable along the further bar 18 and is driven by a further motor 23 driving a looped belt 24 engaging the trimming unit 20.

On the tool-holder heads 4, riveting tools, milling tools, drilling tools or fire or ink jet marking tools can be arranged, said tools being suitable to carry out, on the article 9, riveting operations, milling operations, drilling operations and marking operations, respectively. Thus the machine can carry out simultaneously, or in sequence, different kinds of workings on a same article 9, which results in a great flexibility in use, considerable saving of working times and a resultant considerable productivity increase.

Advantageously the marking tool is arranged on a head 4 slidable on a still further bar, not shown, slidable along the uprights 5 of the portal 2.

## Claims

1. Machine (1) for working wood articles (9), comprising at least a tool-holder head (4) movable on portal means (2, 3) associable with rest means for said articles (9), said portal means (2, 3) comprising end portions provided with sliding means capable of coupling with a sliding surface, said sliding surface being distinct from said rest means, **characterized in that** said portal means further comprises bar means (3) vertically slidable on uprights (5) of said portal means (2), tool-holder heads (4) sliding on said bar means (2), and **in that** it further comprises pin means (14) associated with said bar means (3) and suitable to make them rotatable with respect to a longitudinal axis of said bar means.

2. Machine (1) according to claim 1, comprising a plurality of tool-holder heads (4) movable on said portal means (2, 3), each tool-holder head (4) of said plurality of tool-holder heads (4) being associated with respective driving means, independent of respective driving means of each of the other tool-holder heads (4).

3. Machine (1) according to one of the preceding claims, wherein said tool-holder heads (4) are associable to tools capable of carrying out workings of different type on said articles (9).

4. Machine (1) according to claim 3, wherein said tools are selected from a group comprising riveting tools, milling tools, drilling tools, marking tools.

5. Machine (1) according to claim 4, wherein said marking tools are fire or ink jet marking tools.

6. Machine (1) according to one of the preceding claims, further comprising further support means (18) suitable to slidably support a trimming unit (20) of said articles (9).

7. Machine (1) according to one of claims 4 to 6, further comprising still further support means suitable to slidably support the tool-holder heads (4) of that marking tools.

8. Machine (1) according to one of claims 6 to 7, wherein said further support means comprises further bar means (18) vertically slidable on the uprights (5) of said portal means (2), said trimming unit (20) being slidable on said further bar means.

9. Machine (1) according to one of claims from 7 to 8, wherein said still further support means comprises still further bar means vertically slidable on the uprights (5) of said portal means (2), the tool-holder heads (4) of said marking heads sliding on said still further bar means.

10. Machine (1) according to one of the preceding claims, wherein said sliding means are suitable to couple with track means (6) associated with said sliding surface

11. Machine (1) according to one of the preceding claims, and further comprising a numerical control device (7) suitable to drive the movements of said tool-holder heads (4), of said bar means (3) and of said portal means (2).

12. Machine (1) according to one of the preceding claims, and further comprising sensor means suitable to survey the shape and position of said semi-finished articles (9).

13. Machine (1) according to claim 12, wherein said sensor means are optical scanning means.

14. Machine (1) according to claim 13, wherein said optical scanning means are laser optical scanning means.

15. Machine (1) according to one of claims from 11 to 14, wherein the numerical control device is suitable to receive informations from said sensor means and to calculate a set of points where working operations of said articles (9) are to be carried out. 1

16. Machine (1) according to one of claims from 11 to 15, wherein said numerical control device includes a set of working programs, each of said programs allowing said machine (1) to carry out one or more workings of a corresponding type of article (9), said programs being capable of being selected by a user.

17. Machine (1) according to claim 16, wherein said numerical control device (7) is suitable to be programmed by a user to allow said machine (1) to carry out one or more workings of a new size of article (9).

18. Machine (1) according to claim 1, and further comprising rod means (17) having a fulcrum at said pin means (14).

19. Machine (1) according to claim 18, and further comprising driving means (15) suitable to drive said rod means (17), that, in turn, are suitable to transmit the rotation to said bar means (3).

20. Machine (1) according to one of the preceding claims, wherein said driving means comprises a motorized wheel (11) driven by a respective motor.

21. Machine (1) according to claim 20, wherein said motorized wheel (11) is engaged by a fixed toothed belt (10) extending through the length of said bar means (3).

22. Machine (1) according to claim 21, wherein said motorized wheel (11) is associated to a block (13) on which a respective tool-holder head (4) is arranged.

23. Machine (1) according to claim 22, wherein two freely rotatable wheels (12) are associated with said block (13), said freely rotatable wheels (12) being engaged by said toothed belt (10) and being suitable to keep the orientation of said block (13) constant during slidings thereof along a longitudinal direction of said bar means (3).

24. Machine (1) according to one of the preceding claims, further comprising holder means for said articles (9).

## Patentansprüche

1. Maschine (1) zur Bearbeitung von Gegenständen (9) aus Holz, mit wenigstens einem an einer Portaleinrichtung (2, 3) bewegbaren Werkzeughalterkopf (4), wobei die Portaleinrichtung (2, 3) Haltemitteln für die Gegenstände (9) zuzuordnen ist und Endabschnitte umfasst, die mit Gleitteilen versehen sind, die mit einer Gleitfläche koppelbar sind, wobei die Gleitfläche getrennt von der Portaleinrichtung ist, **dadurch gekennzeichnet, dass** die Portaleinrichtung weiter Stangenmittel (3) umfasst, wobei Werkzeughalterköpfe (4) auf den Stangenmitteln (3) gleiten, und dass sie ferner Bolzenmittel (14) umfasst, die den Stangenmitteln (3) zugeordnet und dazu geeignet sind, sie bezogen auf eine Längsachse der Stangenmittel (3) drehbar auszulegen.

2. Maschine (1) nach Anspruch 1, mit einer Vielzahl von Werkzeughalterköpfen (4), die an der Trageinrichtung (2, 3) bewegbar sind, wobei jeder Werkzeughalterkopf (4) aus der Vielzahl von Werkzeughalterköpfen (4) entsprechenden Antriebsmitteln zugeordnet ist, die unabhängig von entsprechenden Antriebsmitteln eines jeden der anderen Werkzeughalterköpfe (4) sind.

3. Maschine (1) nach einem der vorhergehenden Ansprüche, bei der die Werkzeughalterköpfe (4) Werkzeugen zuzuordnen sind, die dazu in der Lage sind, verschiedene Arten von Bearbeitung an den Gegenständen (9) durchzuführen.

4. Maschine (1) nach Anspruch 3, bei der die Werkzeuge ausgewählt sind aus einer Gruppe, die Nietwerkzeuge, Fräswerkzeuge, Bohrwerkzeuge, Markierungswerkzeuge umfasst.

5. Maschine (1) nach Anspruch 4, bei der die Markierungswerkzeuge mit Feuer oder Tintenstrahl arbeitende Markierungswerkzeuge sind.

6. Maschine (1) nach einem der vorhergehenden Ansprüche, die ferner weitere Tragmittel (18) umfasst, die dazu geeignet sind, auf verschiebliche Weise eine Zurichteinheit (20) für die Gegenstände (9) zu tragen.

7. Maschine (1) nach einem der Ansprüche 4 bis 6, die weiter zusätzliche Tragmittel umfasst, die dazu geeignet sind, auf verschiebliche Weise die Werkzeughalterköpfe (4) der Markierungswerkzeuge zu tragen.

8. Maschine (1) nach einem der Ansprüche 6 bis 7, bei der die weiteren Tragmittel Stangenmittel (18) umfassen, die vertikal an Ständern (5) der Portaleinrichtung (2) verschieblich sind, wobei die Zurichteinheit (20) verschieblich an den weiteren Stangenmitteln ist.

9. Maschine (1) nach einem der Ansprüche 7 bis 8, bei der die weiter zusätzlichen Tragmittel noch weitere Stangenmittel umfassen, die vertikal an Ständern (5) der Portaleinrichtung (2) verschieblich sind, wobei die Werkzeughalterköpfe (4) der Markierungsköpfe auf den noch weiter vorgesehenen Stangenmitteln gleiten.

10. Maschine (1) nach einem der vorhergehenden Ansprüche, bei der die Gleitteile dazu geeignet sind, mit Spurmitteln (6) zu koppeln, die der Gleitfläche zugeordnet sind.

11. Maschine (1) nach einem der vorhergehenden Ansprüche, die weiter ein numerisches Steuergerät (7) umfasst, das dazu geeignet ist, die Bewegungen der Werkzeughalterköpfe (4), der Stangenmittel (3) und der Portaleinrichtung (2) zu steuern.

12. Maschine (1) nach einem der vorhergehenden Ansprüche, die ferner Sensormittel umfasst, die dazu geeignet sind, die Form und Lage der halb fertiggestellten Gegenstände (9) aufzunehmen.

13. Maschine (1) nach Anspruch 12, bei der die Sensormittel optische Abtastmittel sind.

14. Maschine (1) nach Anspruch 13, bei der die optischen Abtastmittel laseroptische Abtastmittel sind.

15. Maschine (1) nach einem der Ansprüche 11 bis 14, bei der das numerische Steuergerät dazu geeignet ist, Informationen von den Sensormitteln zu empfangen und einen Satz von Punkten zu berechnen, an denen Bearbeitungsvorgänge an den Gegenständen (9) auszuführen sind.

16. Maschine (1) nach einem der Ansprüche 11 bis 15, bei der das numerische Steuergerät einen Satz von Arbeitsprogrammen enthält, wobei jedes der Programme es der Maschine (1) ermöglicht, eine oder mehrere Bearbeitungsvorgänge an einem entsprechenden Typ von Gegenständen (9) auszuführen, wobei die Programme von einem Anwender ausgewählt werden können.

17. Maschine (1) nach Anspruch 16, bei der das numerische Steuergerät (7) dazu geeignet ist, durch einen Anwender programmiert zu werden, um es der Maschine (1) zu ermöglichen, einen oder mehrere Bearbeitungsvorgänge an einer neuen Klasse von Gegenständen (9) auszuführen.

18. Maschine (1) nach Anspruch 1, die weiter Stabmittel (17) umfasst, die an den Bolzenmitteln (14) eine Hebelstütze haben.

19. Maschine (1) nach Anspruch 18, die weiter Antriebsmittel (15) umfasst, die dazu geeignet sind, die Stabmittel (17) anzutreiben, die wiederum dazu geeignet sind, die Drehung auf die Stangenmittel (3) zu übertragen.

20. Maschine (1) nach einem der vorhergehenden Ansprüche, bei der die Antriebsmittel ein durch einen entsprechenden Motor angetriebenes, motorisiertes Rad (11) umfassen.

21. Maschine (1) nach Anspruch 20, bei der das motorisierte Rad (11) in Eingriff ist mit einem fixierten Zahnriemen (10), der sich über die Länge der Stangenmittel (3) erstreckt.

22. Maschine (1) nach Anspruch 21, bei der das motorisierte Rad (11) einem Block (13) zugeordnet ist, an dem ein entsprechender Werkzeughalterkopf (4) angeordnet ist.

23. Maschine (1) nach Anspruch 22, bei der dem Block (13) zwei frei drehbare Räder (12) zugeordnet sind, wobei die frei drehtbaren Räder (12) in Eingriff mit dem Zahnriemen (10) und dazu geeignet sind, die Ausrichtung des Blockes (13) während dessen Gleitens längs einer Längsrichtung der Stangenmittel (3) beizubehalten.

24. Maschine (1) nach einem der vorhergehenden Ansprüche, die weiter Haltemittel für die Gegenstände (9) umfasst.

## Revendications

1. Machine (1) pour le travail d'articles (9) en bois, comprenant au moins une tête (4) porte-outil mobile sur un moyen de portique (2, 3) associable à des moyens de support pour lesdits articles (9), ledit moyen de portique (2, 3) comprenant des portions d'extrémité munies de moyens coulissants aptes à un couplage avec une surface de glissement, ladite surface de glissement étant distincte dudit moyen de portique, ***caractérisée en ce que*** ledit moyen de portique comprend en plus des moyens de barre (3), les têtes (4) porte-outils coulissant sur lesdits moyens de barre (3), et ***en ce qu'***il comprend en plus des moyens de broche (14) associés auxdits moyens de barre (3) et aptes à les rendre rotatifs par rapport à un axe longitudinal desdits moyens de barre (3).

2. Machine (1) selon la revendication 1, comprenant une pluralité de têtes (4) porte-outils mobiles sur ledit moyen de portique (2, 3), chaque tête (4) porte-outil de ladite pluralité de têtes (4) porte-outils étant associée à un moyen d'entraînement respectif indépendant des moyens d'entraînement respectifs de chacune des autres têtes (4) porte-outils.

3. Machine (1) selon l'une quelconque des revendications précédentes, dans laquelle lesdites têtes (4) porte-outils sont associables à des outils aptes à effectuer des travaux de type différent sur lesdits articles (9).

4. Machine (1) selon la revendication 3, dans laquelle lesdits outils sont choisis parmi le groupe comprenant des outils de rivetage, des outils de fraisage, des outils de perçage, des outils de marquage.

5. Machine (1) selon la revendication 4, dans laquelle lesdits outils de marquage sont des outils de marquage par pyrogravure ou par jet d'encre.

6. Machine (1) selon l'une quelconque des revendications précédentes, comprenant des moyens de support supplémentaires (18) aptes à supporter de manière coulissante une unité d'équarrissage (20) desdits articles (9).

7. Machine (1) selon l'une quelconque des revendications 5 à 7, comprenant de plus encore d'autres moyens de support supplémentaires aptes à supporter de manière coulissante les têtes (4) porte-outils de ces outils de marquage.

8. Machine (1) selon l'une quelconque des revendications 6 à 7, dans laquelle lesdits moyens de support supplémentaires comprennent des moyens de barre supplémentaires (18) montés coulissant verticalement sur les montants (5) dudit moyen de portique (2), ladite unité d'équarrissage (20) étant montée coulissante sur lesdits moyens de barre supplémentaires.

9. Machine (1) selon l'une quelconque des revendications 7 à 8, dans laquelle lesdits encore d'autres moyens de support supplémentaires comprennent encore d'autres moyens de barre supplémentaires montés verticalement coulissants sur les montants (5) desdits moyens de portique (2), les têtes (4) des porte-outils desdites têtes de marquage coulissant sur lesdits encore d'autres moyens de barre supplémentaire.

10. Machine (1) selon l'une quelconque des revendications précédentes, dans laquelle lesdits moyens coulissants sont aptes à un couplage avec des moyens de glissière de guidage (6) associés à ladite surface de glissement

11. Machine (1) selon l'une quelconque des revendications précédentes, et comprenant de plus un dispositif de commande numérique (7) apte à commander les déplacement desdites têtes (4) porte-outils, desdits moyens de barre (3) et desdits moyens de portique (2).

12. Machine (1) selon l'une quelconque des revendications précédentes, et comprenant de plus des moyens de capteur aptes à surveiller la forme et la position desdits articles semi-finis (9).

13. Machine (1) selon la revendication 9, dans laquelle lesdits moyens de capteur sont des moyens d'analyseur optique.

14. Machine (1) selon la revendication 13, dans laquelle lesdits moyens d'analyseur optique sont des moyens d'analyseur optique à laser.

15. Machine (1) selon l'une quelconque des revendications 11 à 14, dans laquelle le dispositif de commande numérique est apte à recevoir des informations desdits moyens de capteur et à calculer un jeu de points où doivent être réalisées les opérations de travail desdits articles (9).

16. Machine (1) selon l'une quelconque des revendications 11 à 15, dans laquelle ledit dispositif de commande numérique comprend un jeu de programmes de travail, chacun desdits programmes autorisant ladite machine (1) à effectuer un ou plusieurs travaux d'un type correspondant d'article (9), lesdits programmes étant aptes à être sélectionnés par un utilisateur.

17. Machine (1) selon la revendication 16, dans laquelle ledit dispositif de commande numérique (7) est apte à être programmé par un utilisateur pour permettre à ladite machine (1) d'effectuer un ou plusieurs travaux d'une nouvelle taille d'article (9).

18. Machine (1) selon la revendication 1, et comprenant de plus des moyens de tige (17) ayant un point d'appui de levier sur lesdits moyens de broche (14).

19. Machine (1) selon la revendication 18 et comprenant de plus des moyens d'entraînement (15) aptes à entraîner lesdits moyens de tige (17) qui, à leur tour, sont aptes à transmettre la rotation auxdits moyens de barre (3).

20. Machine (1) selon l'une quelconque des revendications précédentes, dans laquelle lesdits moyens d'entraînement comprennent une roue motorisée (11) entraînée par un moteur respectif.

21. Machine (1) selon la revendication 20, dans laquelle ladite roue motorisée (11) est en prise avec une courroie dentée fixe (10) s'étendant sur la longueur desdits moyens de barre (3).

22. Machine (1) selon la revendication 21, dans laquelle ladite roue motorisée (11) est associée à un bloc (13) sur lequel est agencée une tête (4) porte-outil respective.

23. Machine (1) selon la revendication 22, dans laquelle deux roues (12) librement rotatives sont associées audit bloc (13), lesdits roues librement rotatives (12) étant enclenchées par ladite courroie dentée (10) et étant aptes à garder constante l'orientation dudit bloc (13) pendant le coulissement de celui-ci le long de la direction longitudinale desdites moyens de barre (3).

24. Machine (1) selon l'une quelconque des revendications précédentes, comprenant de plus des moyens de soutien pour lesdits articles (9).
